# EUROPÄISCHE PATENTSCHRIFT

(11) **EP 2 319 286 B1**
(45) Veröffentlichungstag und Bekanntmachung des Hinweises auf die Patenterteilung: **20.03.2013**
(21) Anmeldenummer: 10190369.8
(22) Anmeldetag: 08.11.2010
(51) Int. Cl.: A01C 3/02, C02F 3/20

(54) **Rührwerk und Verfahren zum Verrühren und Abpumpen Feststoffe enthaltender Flüssigkeiten**
Stirring assembly and method for stirring and pumping liquids containing solids
Agitateur et procédé de mélange et de vidange de liquides contenant des matières solides

(30) Priorität: 08.11.2009 DE 102009053188
(43) Veröffentlichungstag der Anmeldung: 11.05.2011
(73) Patentinhaber: Brand Gülletechnik GmbH, 49176 Hilter (DE)
(72) Erfinder: Brand, Heinrich, 49176 Hilter (DE)
(74) Vertreter: Bossmeyer, Jörg Peter

(56) Entgegenhaltungen:
- EP-A1- 0 042 620
- EP-A1- 1 419 684
- DE-A1- 3 311 936
- DE-A1- 4 436 997

## Beschreibung

Die Erfindung betrifft ein Rührwerk nach dem Oberbegriff des Patentanspruches 1 sowie ein Verfahren zum Verrühren und Abpumpen Feststoffe enthaltender Flüssigkeiten.

Zum Zerkleinern fester Bestandteile in Gülle und ähnlichen, feste Bestandteile aufweisenden Flüssigkeiten sind Rührwerke in unterschiedlichen Ausfertigungen im Einsatz. Bei Gülle oder auch Jauche handelt es sich um die Ausscheidungen von Menschen und/oder Tieren. Die Gülle wird insbesondere im ländlichen Bereich häufig in Behältern gesammelt, bevor sie abgepumpt und entsorgt werden kann. Bekannt sind zum Beispiel "Zapfwellenmixer", die über den Behälterrand eines mit Gülle gefüllten Hochbehälters beziehungsweise unmittelbar in hierfür vorgesehene Erdgruben eingeführt werden können. Die Zapfwellenmixer sind mit herkömmlichen Traktoren koppelbar, wobei teilweise unbefriedigende Rührergebnisse erzielt werden.

Transportable Kleinrührwerke für die Verwendung in Ställen sind als sogenannte "Spaltenmixer" ebenso bekannt. Hierbei besteht das Problem, dass in den Kanälen, in denen die Flüssigkeit aufbereitet werden soll, häufig starke Verdickungen und Verfestigungen entstehen können. Der Kanal begrenzt auch die freie Bewegungsmöglichkeit des darin eingeführten Rührwerks, was die Erzeugung einer Strömung und damit die Aufbereitung der Flüssigkeit erschwert. Weiterhin konnte festgestellt werden, dass die zum Teil unbefriedigenden Ergebnisse beim Verrühren daher kommen, dass den Strömungsverhältnissen hinter dem Flügelrad, also in Abströmrichtung, zu wenig Beachtung geschenkt wurde. Zudem bildet sich sowohl in den eingangs erwähnten Behältern, als auch in den Kanälen eine verkrustete Schwimmschicht auf der Oberfläche der Flüssigkeit aus, deren Bearbeitung zusätzliche Aufwendungen erfordert. Ein Rührwerk für Feststoffe enthaltende Flüssigkeiten, wie Gülle, mit mindestens einem Antrieb für eine Rührwelle, mit der wenigstens ein in einem Gehäuse aufgenommenes und durch die Rührwelle in Rotation versetzbares Flügelrad gekoppelt ist, geht beispielsweise aus der EP 1 419 684 A1 hervor, wobei an dem Gehäuse dieser Lösung wenigstens eine Ansaugöffnung und mindestens zwei Ausströmstutzen vorhanden sind. Nach dem Offenbarungsgehalt der Schrift sind die Ausströmstutzen in einander entgegen gesetzten Richtungen an dem Gehäuse angeordnet.

Darüber hinaus ist aus der EP 0 042 620 A 1 ein Rührwerk für Feststoffe enthaltende Flüssigkeiten, wie Gülle, mit mindestens einem Antrieb bekannt, dessen Antrieb eine Rührwelle in Rotation versetzt, mit der wenigstens ein in einem Gehäuse aufgenommenes und durch die Rührwelle in Rotation versetzbares Flügelrad gekoppelt ist. An dem Gehäuse dieser Lösung ist eine Ansaugöffnung und lediglich ein Ausströmstutzen vorhanden, der waagerecht verläuft oder eine geringe Neigung nach unten, zum Boden, aufweist. Nachteilig bei einem derartigen Rührwerk ist allerdings der erhebliche und für den Bediener schwer auszugleichende Rückstoß beim Einschalten des Antriebs sowie die schwierige Handhabung während des Betriebes infolge der entstehenden Rotationskräfte, die durch die einseitige Abführung des Flüssigkeitsstrahls noch verstärkt werden.

Der Erfindung liegt die Aufgabe zugrunde, ein Rührwerk für Feststoffe enthaltende Flüssigkeiten, wie Gülle, bereitzustellen, das durch eine optimierte Strömungsführung insgesamt das Aufrühren der Feststoffe in der Flüssigkeit in kurzer Zeit und mit befriedigendem Ergebnis gestattet und das möglichst einfach und kompakt aufgebaut ist. Es soll ferner ein Verfahren bereitgestellt werden, dass eine möglichst kräfteneutrale Arbeitsweise des Rührwerkes ermöglicht.

Gelöst wird diese Aufgabenstellung mit den Merkmalen der unabhängigen Patentansprüche 1 und 17. Weitere Ausgestaltungen der Erfindung sind in den sich anschließenden Unteransprüchen wiedergegeben.

Ein Rührwerk für Feststoffe enthaltende Flüssigkeiten, wie Gülle, mit mindestens einem Antrieb für eine Rührwelle, mit der wenigstens ein in einem Gehäuse aufgenommenes und durch die Rührwelle in Rotation versetzbares Flügelrad gekoppelt ist, wobei an dem Gehäuse wenigstens eine Ansaugöffnung und mindestens zwei Ausströmstutzen vorhanden sind, wurde erfindungsgemäß dahingehend weitergebildet, dass auf eine gemeinsame Ebene projiziert je zwei der Ausströmstutzen eine gemeinsame, V-förmige Anordnung aufweisen, sodass die Abströmrichtung jedes Ausströmstutzens zwischen 10° und 70° zur Ansaugrichtung der über die Ansaugöffnung angesaugten, verrührten, jedoch Feststoffe enthaltenden Flüssigkeit beträgt, wobei die Ausströmstutzen in ihrer Abströmrichtung verstellbar ausgeführt sind.

Mit der Erfindung ist es gelungen, ein Rührwerk für Feststoffe enthaltende Flüssigkeiten, wie Gülle, bereitzustellen, das durch eine optimierte Strömungsführung insgesamt das Aufrühren der Feststoffe in der Flüssigkeit in kürzester Zeit und mit bestem Ergebnis gestattet und das dabei einfach und kompakt aufgebaut ist. Durch die Verstellbarkeit der Ausströmstutzen kann der angegebene Winkelbereich vor dem Absenken des Rührwerkes in die Flüssigkeit eingestellt werden. Dies ist von Vorteil, weil häufig erst vor Ort oder während des Betriebs des Rührwerkes die Beschaffenheit der zu verrührenden Flüssigkeit deutlich wird.
Zwar kann für das Rührwerk grundsätzlich jede Art Antrieb verwendet werden, also zum Beispiel auch ein Hydraulikantrieb. Jedoch wird bevorzugt ein Elektromotor eingesetzt, sodass dieser beispielsweise als Tauchmotor Verwendung finden kann.
Das Rührwerk kann sowohl als Zapfwellenmixer oder als transportables Rührwerk zum Einsatz in Flüssigkeitskanälen dienen. Die erfindungsgemäße Anordnung der Ausströmstutzen und die sich daraus ergebenden Abströmrichtungen der verrührten Flüssigkeit erzeugen eine Düsenwirkung, sodass schon bei geringer Leistungsaufnahme extrem gute Rührergebnisse erreicht werden können.

Zwar ist es möglich und liegt im Bereich der Erfindung, das Flügelrad mittelbar mit der Rührwelle zu verbinden, also beispielsweise ein Getriebe vorzusehen. Im Zuge des Bestrebens nach einer einfachen und kompakten Ausführung des Rührwerkes besteht jedoch eine erste Ausgestaltung der Erfindung darin, dass das Flügelrad und die Rührwelle eine gemeinsame, geometrische Rotationsachse aufweisen. In diesem Sinne ist das Flügelrad folglich unmittelbar auf der Rührwelle befestigt. Bei Einsatz mehrerer Flügelräder können diese in axialer Richtung der Rührwelle betrachtet hintereinander angeordnet werden.

Um eine Abströmrichtung der Flüssigkeit zwischen 10° und 70° zur Ansaugrichtung zu erreichen, besteht eine sehr einfache Maßnahme darin, die Ausströmstutzen in einem Winkelbereich zwischen 10° und 70° zur Rotationsachse des Flügelrades auszurichten. Dabei hat sich gezeigt, dass die dadurch gegebene V-förmige Anordnung der Ausströmstutzen zu einer Steigerung der Strömungsgeschwindigkeit führt, je spitzer diese V-Form ist, das heißt, je dichter die Öffnungsabschnitte der Ausströmstutzen beieinander liegen.

Bevorzugt wird jedoch ein Winkel von 30°, 45° oder 60° verwendet, weil hiermit sehr gute Strömungsverhältnisse erreicht werden können.

Eine einfache und sehr wirkungsvolle Ausführung des Gehäuses wird entsprechend einer Weiterbildung der Erfindung darin gesehen, dass das Gehäuse zumindest zwei, im Querschnitt kreisförmige Abschnitte seiner Mantelfläche aufweist, die sich spiralförmig erweiternd in einen zumindest teilweise radial oder tangential zu den kreisförmigen Abschnitten verlaufenden Bereich übergehen. Mit anderen Worten ist der Aufbau des Gehäuses dem eines Schneckenhauses ähnlich, das jedoch über mindestens zwei Ausströmstutzen verfügt.

Ein ganz besonders vorteilhafter Lösungsvorschlag sieht eine endseitige Krümmung der Ausströmstutzen des Gehäuses vor. Dabei geht der radiale beziehungsweise tangentiale Abschnitt des Gehäuses in den Krümmungsabschnitt des jeweiligen Ausströmstutzens über, wobei strömungsoptimiert ein harmonischer Übergang vorzusehen ist, weil dadurch Turbulenzen der Strömung vermieden werden können. Die Ausrichtung der Krümmung der Ausströmstutzen kann dabei geringfügig entgegen (jedoch nicht direkt entgegen) der Ansaugrichtung der zu verrührenden Flüssigkeit ausgerichtet sein. Eine andere Ausrichtung ist durch die Anordnung der endseitigen Krümmung der Ausströmstutzen in Flussrichtung oder schräg zur Flussrichtung der über die Ansaugöffnung angesaugten Flüssigkeit gegeben.

Einem weiteren Erfindungsgedanken folgend kann das Gehäuse mehrere, über seine Mantelfläche verteilte Ausströmstutzen aufweisen.

Von besonderem Vorteil ist es auch, wenn die Ausströmstutzen lösbar mit dem Gehäuse verbunden sind. Auf diese Weise besteht die Möglichkeit, die Ausströmstutzen auszutauschen, wenn sich zum Beispiel herausstellen sollte, dass die erreichten Rührergebnisse nicht ausreichen. Weiterhin können durch eine derartige Ausführung beschädigte Ausströmstutzen schnell und unkompliziert ausgetauscht werden.

Zur Verstärkung der Strömungsgeschwindigkeit wird darüber hinaus vorgeschlagen, dass die Ausströmstutzen einen sich in Ausströmrichtung verjüngenden Öffnungsabschnitt aufweisen. Umgekehrt kann die Strömungsgeschwindigkeit reduziert werden, indem die Ausströmstutzen einen sich in Ausströmrichtung erweiternden Öffnungsabschnitt aufweisen. Durch die aufgezeigten Varianten kann das erfindungsgemäße Rührwerk modular ausgeführt sein und bietet damit eine optimale Anpassung an jede zu erwartende Aufgabenstellung. Im Zusammenhang mit der zuvor erwähnten Austauschbarkeit der Ausströmstutzen ergibt sich auch die Möglichkeit, den Austausch vorzunehmen, um einen anderen Öffnungsabschnitt zu nutzen.

Darüber hinaus ist es auch möglich, das Gehäuse insgesamt schwenkbar beziehungsweise drehbar auszuführen. Hierzu kann das Gehäuse mit einer Stelleinrichtung verbunden sein, die eine Hebelmechanik, Hydraulik, Pneumatik oder einen elektromotorischen beziehungsweise elektromagnetischen Stellantrieb oder eine Kombination aus mindestens zwei dieser Mechanismen beziehungsweise Wirkprinzipien zur veränderbaren Festlegung des Gehäuses aufweist. Um die gewählte Position des Gehäuses zu fixieren, ist es sinnvoll, wenn die Stelleinrichtung eine Rastiervorrichtung aufweist.

Da ein erfindungsgemäßes Rührwerk nicht nur als transportables Kleinrührwerk zum Einsatz kommen kann, sondern beispielsweise auch in Großbehältern, als stationäres Rührwerk, wird vorgeschlagen, dass das Rührwerk mit einer Abpumpvorrichtung koppelbar ist, die über je einen Abpumpstutzen je vorhandenem Ausströmstutzen verfügt, wobei die gesamte Abpumpvorrichtung in Relation zum Rührwerk oder das Rührwerk in Relation zur Abpumpvorrichtung bewegbar ausgeführt ist, sodass dadurch die Funktionsstellungen "Rühren" und/oder "Abpumpen" definiert sind. Mit anderen Worten kann das Rührwerk nicht ausschließlich nur zum Aufbereiten, also Verrühren von Gülle verwendet werden. Vielmehr ist mit einfachen Mitteln auch ein Abpumpen der durch das Rührwerk aufbereiteten Gülle ohne eine zusätzliche Pumpe möglich. Hierzu muss nur die Abpumpvorrichtung vor die Ausströmstutzen gesetzt werden. Der Druck der durch das Rührwerk erzeugten Strömung reicht zur Abführung der Gülle aus.

Die Abpumpstutzen sind dabei mit flexiblen Schläuchen oder starren Rohrelementen gekoppelt, die die Flüssigkeit abführen, sodass sie beispielsweise aus einem Behälter abgepumpt und in einen Tankwagen abgefüllt werden kann.

Insbesondere bei einer Verwendung des Rührwerkes als stationäre Einrichtung, beispielsweise in einem Güllebehälter, ist das Rührwerk oder die Abpumpvorrichtung gemäß einem weitergehenden Vorschlag der Erfindung in einer Halterung zur Höhenverstellung aufgenommen.

Das erfindungsgemäße Verfahren zum Verrühren und Abpumpen Feststoffe enthaltender Flüssigkeiten mit einem Rührwerk erfolgt derart, dass die Abpumpstutzen gleichzeitig, also synchron oder einzeln, also separat vor die Ausströmstutzen des Rührwerkes geschoben werden. Damit eröffnen sich verschiedene Möglichkeiten. Werden nicht sämtliche Abpumpstutzen synchron, also gleichzeitig vor die Ausströmstutzen verbracht, sondern nur einzelne Abpumpstutzen, so kann gleichzeitig einen Verrühren und Abpumpen durch das Rührwerk erfolgen. Die Arbeitsweise des erfindungsgemäßen Rührwerkes ist damit besonders effekttief.

Der Vorteil einer synchronen Anordnung der Abpumpstutzen vor den Ausströmstutzen besteht hingegen in einer kräfteneutralen Arbeitsweise des Rührwerkes.

Eine bevorzugte Ausführungsform eines erfindungsgemäßen Rührwerkes wird nachfolgend anhand der Zeichnung näher erläutert.

Es zeigen:
- Figur 1:: ausschnittsweise eine perspektivische Ansicht eines Rührwerkes,
- Figur 2:: eine Ansicht senkrecht zur Rotationsachse,
- Figur 3:: einen Blick auf das Gehäuse, senkrecht zur Rotationsachse
- Figur 4:: eine perspektivische Ansicht eines Rührwerkes mit einer Abpumpvorrichtung
und
- Figur 5:: ein erfindungsgemäßes Rührwerk als stationäre Ausführung in einem Behälter.

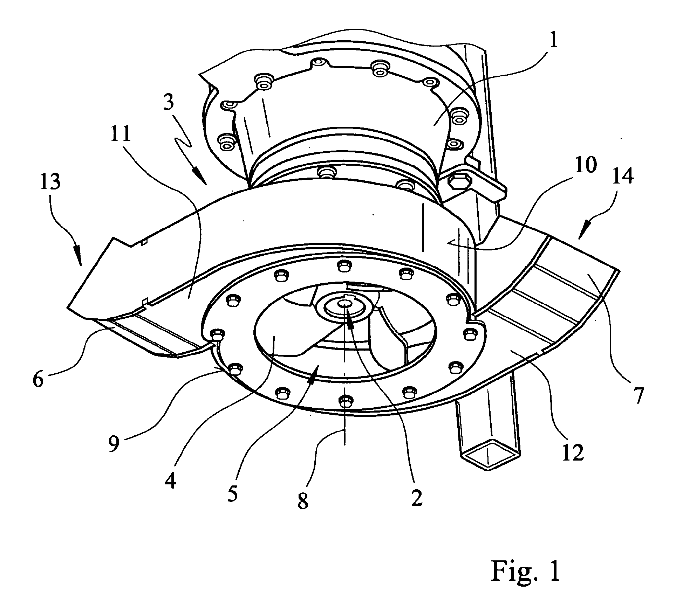

Bei dem in der Figur 1 dargestellten Rührwerk handelt es sich um eine transportable Ausführung. Das Rührwerk wird insgesamt in die aufzubereitende Flüssigkeit abgesenkt, weshalb als Antrieb 1 vorliegend ein Tauchmotor zum Einsatz kommt, der hier nur andeutungsweise gezeigt ist. Der Antrieb 1 versetzt eine Rührwelle 2 in Rotation, an deren Ende ein Flügelrad 4 angebracht ist. Das Flügelrad 4 befindet sich geschützt in einem Gehäuse 3, dessen Ansaugöffnung 5 hier kreisrund ausgeführt ist, sodass der Mittelpunkt der Ansaugöffnung 5 auf der geometrischen Rotationsachse 8 der Rührwelle 2 liegt. Das Flügelrad 4 hat die Aufgabe, die zu verarbeitende Flüssigkeit anzusaugen, sodass es als Pumpe wirkt und dabei in der Flüssigkeit enthaltene Feststoffe zu zerkleinern, bevor die auf diese Weise verdünnte und verrührte Flüssigkeit über die am Gehäuse 3 vorhandenen Ausströmstutzen 6, 7 abgegeben wird. Das in der Figur 1 gezeigte Beispiel eines Rührwerkes nach der Erfindung weist ein schneckenhausartiges Gehäuse 3 auf, das ausgehend von zwei kreisförmigen Abschnitten 9 und 10 jeweils in einen annähernd tangentialen Bereich 11 beziehungsweise 12 übergeht, an den sich schließlich die entsprechenden Öffnungsabschnitte 13, 14 der Ausströmstutzen 6, 7 anschließen.

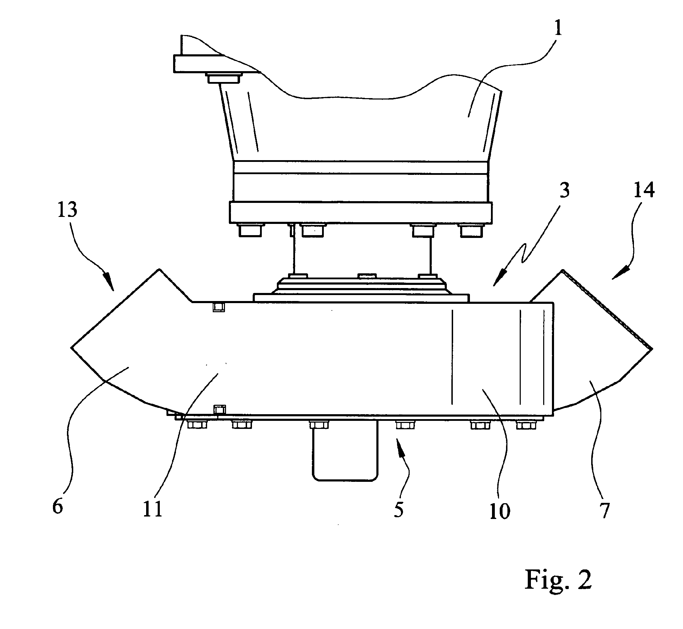

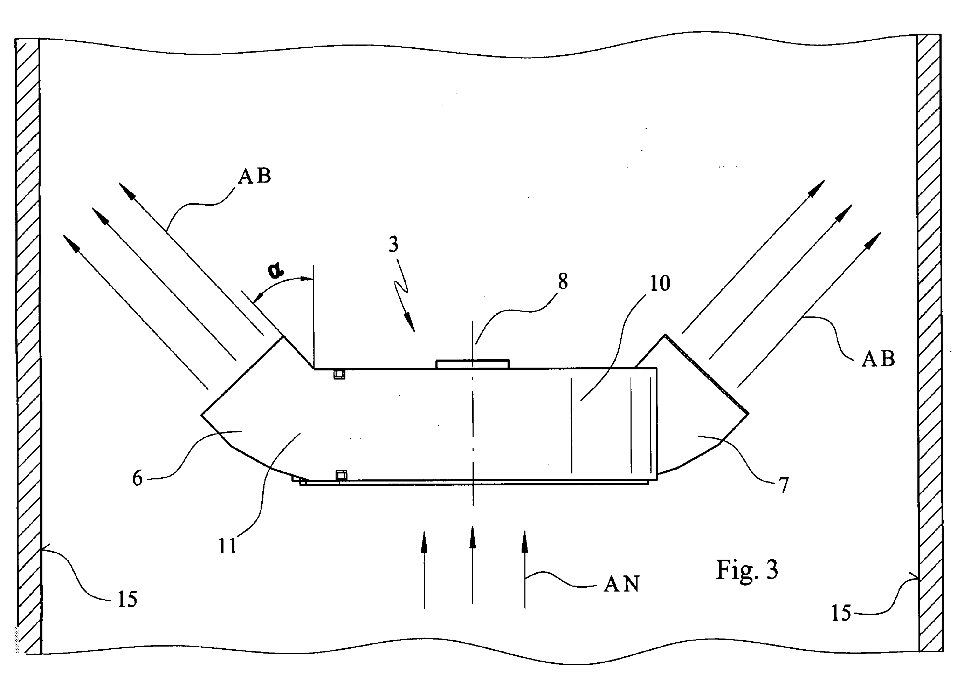

Die erfindungsgemäße Besonderheit geht anschaulicher aus den Figuren 2 und 3 hervor, in denen als wesentliches Element das Gehäuse 3 in einer Perspektive dargestellt ist, die einer Projektion in eine Ebene entspricht. Aus den Figuren 2 und 3 wird deutlich, dass der kreisförmige Abschnitt 10 des Gehäuses 3 fließend in den tangentialen Bereich 11 und schließlich in den Ausströmstutzen 6 mit dem Öffnungsabschnitt 13 übergeht. Der Öffnungsabschnitt 13 weist einen gleich bleibenden Querschnitt auf. Ebenso verhält es sich selbstverständlich mit dem korrespondierenden Ausströmstutzen 7, der wegen der gewählten Darstellung in den Figuren 2 und 3 nur andeutungsweise sichtbar ist. Von Bedeutung ist allerdings, dass die beiden Ausströmstutzen 6, 7 eine gemeinsame, V-förmige Anordnung aufweisen, wobei sie in einem Winkelbereich zwischen 10° und 70° zur Rotationsachse 8 ausgerichtet sind. Bei der gezeigten Ausführung beträgt der Winkel α genau 45°.

Diese bauliche Maßnahme hat zur Folge, dass die in der Figur 3 als Pfeile gekennzeichnete Abströmrichtung (AB) der abgegebenen Flüssigkeit eine Ablenkung von 45° zur ebenfalls durch Pfeile veranschaulichten Ansaugrichtung (AN) der angesaugten Flüssigkeit aufweist und zudem durch den räumlichen Abstand der Ausströmstutzen 6 und 7 am Gehäuse 3 ein zusätzlicher räumlicher Versatz der Strömungsrichtung der abgegebenen Flüssigkeitsströme gegeben ist. Somit wird die Flüssigkeit auf der einen Seite des Gehäuses 3 angesaugt und auf der gegenüberliegenden Seite des Gehäuses 3 über zwei Ausströmstutzen 6, 7 unter einem definierten Winkel im Raum wieder abgegeben, wodurch sich ein Düsen- oder Jet-Prinzip ergibt. In Abströmrichtung (AB) der Flüssigkeit bildet sich durch die damit erzielte Rührwirkung ein aggressiver Rührstrahl aus, der in kürzester Zeit vorhandene Schwimmschichten auflöst und ein problemloses Verrühren der Flüssigkeit sowie eine deutliche Verbesserung der Zerstörung der in der Flüssigkeit enthaltenen Feststoffe ermöglicht, sodass die Flüssigkeit abgepumpt werden kann. Die entstehende Strömung reicht in Flüssigkeitskanälen aus, um die Flüssigkeit über die gesamte, durch die Kanalwände 15 in Figur 3 angedeutete Kanalbreite aufzubereiten, was mit bislang bekannten Ausführungen nicht möglich war. Auf diese Weise kann bei besseren Ergebnissen zusätzlich wertvolle Zeit und Energie eingespart werden.

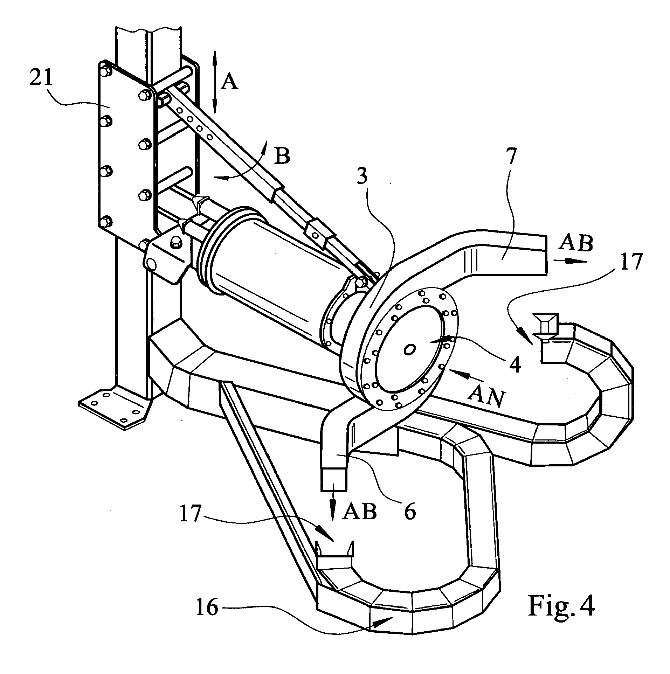

Die Figur 4 veranschaulicht ein erfindungsgemäßes Rührwerk als Bestandteil einer stationären Anlage, wie sie beispielsweise in einem Güllebehälter 20 angewendet werden kann. Das im Bereich der Ausströmstutzen 6, 7 zunächst spiralförmig und anschließend annähernd tangential in die Ausströmstutzen 6, 7 auslaufende Gehäuse 3 weist die Besonderheit auf, dass das Ende der Ausströmstutzen 6, 7 über eine Krümmung verfügt, so dass hierbei die Abströmrichtung AB aus den Ausströmstutzen 6, 7 unter einem schrägen Winkel zur Ansaugrichtung AN verläuft. Darüber hinaus ist das Rührwerk Bestandteil einer Abpumpvorrichtung 16 deren Abpumpstutzen 17 in der Figur 4 von den Enden der Ausströmstutzen 6, 7 entfernt angeordnet sind. Es handelt sich folglich hierbei um die Stellung "Rühren". Die Abpumpstutzen 17 sind hierbei als stationäre Rohrleitungen verlegt. Das Rührwerk ist hingegen in einer Halterung 21 aufgenommen und kann in Richtung des Pfeils A in seiner Höhe innerhalb des Behälters verändert werden. Damit besteht auch die Möglichkeit, das Rührwerk insgesamt mit den Abpumpstutzen 17 zusammenzubringen und damit zu koppeln, so dass wahlweise zwischen den Arbeitsstellungen "Rühren" und "Abpumpen" gewechselt werden kann. Die Halterung 21 dient jedoch auch gleichzeitig dazu, das Rührwerk verschwenkbar in Richtung des Pfeils B aufzunehmen. Diese Verschwenkbarkeit ermöglicht eine optimale Ausrichtung der durch das Rührwerk erzeugten Rührstrahlen.

Bei der in Figur 4 gezeigten Ausführungsvariante eines erfindungsgemäßen Rührwerkes besteht nur die Möglichkeit beide Ausströmstutzen 6, 7 gleichzeitig, also synchron mit den Abpumpstutzen 17 der Abpumpvorrichtung 16 zu koppeln. Wird nur eine einseitige Kopplung eines Abpumpstutzens 17 mit einem der Ausströmstutzen 6 oder 7 vorgesehen, so kann gleichzeitig verrührt und abgepumpt werden.

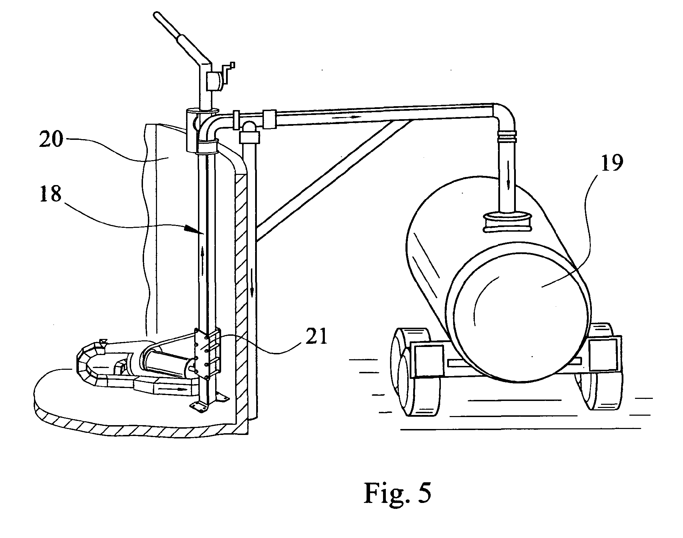

In der Figur 5 ist ein Behälter 20 im Teilschnitt gezeigt, der zur Aufnahme von Flüssigkeit mit festen Bestandteilen, wie beispielsweise Gülle, dient. In den Behälter 20 ist ein erfindungsgemäßes Rührwerk als stationäre Anlage integriert. Zur Aufnahme des Rührwerkes dient dabei ein Gestell 18, an dem die Halterung 21 angebracht ist. Die Halterung 21 ist höhenverstellbar in dem Gestell 18 und kann beispielsweise mittels einer Handkurbel und einem Seilzugsystem in ihrer Höhe im Behälter 20 verändert werden. Die mit den Abpumpstutzen 17 gekoppelten Rohrleitungen verlaufen innerhalb des Gestells 18 bis außerhalb des Behälters 20, wo sie ein Abfüllen der abgepumpten Flüssigkeit in einen Tankwagen 19 ermöglichen. Dieser Anwendungsfall ist nur als ein spezielles Beispiel für die Nutzung eines erfindungsgemäßen Rührwerkes anzusehen.

### Bezugszeichenliste:

- 1.: Antrieb
- 2.: Rührwelle
- 3.: Gehäuse
- 4.: Flügelrad
- 5.: Ansaugöffnung
- 6.: Ausströmstutzen
- 7.: Ausströmstutzen
- 8.: Rotationsachse
- 9.: kreisförmiger Abschnitt
- 10.: kreisförmiger Abschnitt
- 11.: Bereich
- 12.: Bereich
- 13.: Öffnungsabschnitt
- 14.: Öffnungsabschnitt
- 15.: Kanalwand
- 16.: Abpumpvorrichtung
- 17.: Abpumpstutzen
- 18.: Gestell
- 19.: Tankwagen
- 20.: Behälterwand
- 21.: Halterung

## Patentansprüche

1. Rührwerk für Feststoffe enthaltende Flüssigkeiten, wie Gülle, mit mindestens einem Antrieb (1) für eine Rührwelle (2), mit der wenigstens ein in einem Gehäuse (3) aufgenommenes und durch die Rührwelle (2) in Rotation versetzbares Flügelrad (4) gekoppelt ist, wobei an dem Gehäuse (3) wenigstens eine Ansaugöffnung (5) und mindestens zwei Ausströmstutzen (6, 7) vorhanden sind,
**dadurch gekennzeichnet, dass**
auf eine gemeinsame Ebene projiziert je zwei Ausströmstutzen (6, 7) eine gemeinsame, V-förmige Anordnung aufweisen, sodass die Abströmrichtung (AB) jedes Ausströmstutzens (6, 7) zwischen 10° und 70° zur Ansaugrichtung (AN) der über die Ansaugöffnung (5) angesaugten, verrührten, jedoch Feststoffe enthaltenden Flüssigkeit beträgt und die Ausströmstutzen (6, 7) in ihrer Abströmrichtung (AB) verstellbar ausgeführt sind.

2. Rührwerk nach Anspruch 1,
**dadurch gekennzeichnet, dass**
das Flügelrad (4) und die Rührwelle (2) eine gemeinsame, geometrische Rotationsachse (8) aufweisen.

3. Rührwerk nach Anspruch 2,
**dadurch gekennzeichnet, dass**
jeder der Ausströmstutzen (6, 7) mit Bezug zur Rotationsachse (8) in einem Winkelbereich zwischen 10° und 70° ausgerichtet ist.

4. Rührwerk nach Anspruch 2,
**dadurch gekennzeichnet, dass**
jeder der Ausströmstutzen (6, 7) ausgehend von der Rotationsachse (8) in einem Winkel von 30°, 45° oder 60° ausgerichtet ist.

5. Rührwerk nach einem der vorstehend genannten Ansprüche,
**dadurch gekennzeichnet, dass**
das Gehäuse (3) zumindest zwei im Querschnitt kreisförmige Abschnitte (9, 10) seiner Mantelfläche aufweist, die sich spiralförmig erweiternd in einen zumindest teilweise radial oder tangential zu den kreisförmigen Abschnitten (9, 10) verlaufenden Bereich (11, 12) übergehen.

6. Rührwerk nach einem der vorstehend genannten Ansprüche,
**dadurch gekennzeichnet, dass**
das Gehäuse (3) mehrere, gleichmäßig über seine Mantelfläche verteilte Ausströmstutzen (6, 7) aufweist.

7. Rührwerk nach einem der vorstehend genannten Ansprüche,
**dadurch gekennzeichnet, dass**
jeder Ausströmstutzen (6, 7) eine endseitige Krümmung aufweist.

8. Rührwerk nach einem der vorstehend genannten Ansprüche,
**dadurch gekennzeichnet, dass**
die Ausströmstutzen (6, 7) lösbar mit dem Gehäuse (3) verbunden sind.

9. Rührwerk nach einem der vorstehend genannten Ansprüche,
**dadurch gekennzeichnet, dass**
die Ausströmstutzen (6, 7) einen sich in Ausströmrichtung verjüngenden Öffnungsabschnitt (13) aufweisen.

10. Rührwerk nach einem der Ansprüche 1 bis 8,
**dadurch gekennzeichnet, dass**
die Ausströmstutzen (6, 7) einen sich in Ausströmrichtung erweiternden Öffnungsabschnitt (13) aufweisen.

11. Rührwerk nach einem der vorstehend genannten Ansprüche,
**dadurch gekennzeichnet, dass**
das Gehäuse (3) schwenkbar beziehungsweise drehbar ausgeführt ist.

12. Rührwerk nach Anspruch 11,
**dadurch gekennzeichnet, dass**
das Gehäuse (3) mit einer Stelleinrichtung verbunden ist, die eine Hebelmechanik, Hydraulik, Pneumatik oder einen elektromotorischen beziehungsweise elektromagnetischen Stellantrieb oder eine Kombination aus mindestens zwei dieser Mechanismen beziehungsweise Wirkprinzipien zur veränderbaren Festlegung des Gehäuses (3) in mehreren Stellungen um die Rotationsachse (8) aufweist.

13. Rührwerk nach Anspruch 12,
**dadurch gekennzeichnet, dass**
die Stelleinrichtung eine Rastiervorrichtung zur veränderbaren Festlegung des Gehäuses (3) aufweist.

14. Rührwerk nach einem der vorstehend genannten Ansprüche,
**dadurch gekennzeichnet, dass**
das Rührwerk mit einer Abpumpvorrichtung (16) koppelbar ist, die über je einen Abpumpstutzen (17) je vorhandenem Ausströmstutzen (6, 7) verfügt, wobei die gesamte Abpumpvorrichtung (16) in Relation zum Rührwerk oder das Rührwerk in Relation zur Abpumpvorrichtung (16) bewegbar ausgeführt ist, sodass dadurch die Funktionsstellungen "Rühren" und/oder "Abpumpen" definiert sind.

15. Rührwerk nach Anspruch 14,
**dadurch gekennzeichnet, dass**
die Abpumpvorrichtung (16) flexible Schläuche oder starre Rohrelemente aufweist, die mit den Abpumpstutzen (17) gekoppelt sind.

16. Rührwerk nach einem der vorstehend genannten Ansprüche,
**dadurch gekennzeichnet, dass**
das Rührwerk oder die Abpumpvorrichtung (16) in einer Halterung (21) zur Höhenverstellung in einem Behälter aufgenommen ist.

17. Verfahren zum Verrühren und Abpumpen Feststoffe enthaltender Flüssigkeiten mit einem Rührwerk nach einem der vorstehend genannten Ansprüche,
**dadurch gekennzeichnet, dass**
die Abpumpstutzen (17) gleichzeitig, also synchron oder einzeln, also separat vor die Ausströmstutzen (6, 7) des Rührwerkes geschoben werden.

## Claims

1. Stirring mechanism for liquids which contain solids, such as liquid manure, having at least one drive (1) for a stirring shaft (2) to which latter is coupled at least one impeller (4) which is accommodated in a casing (3) and which can be rotated by the stirring shaft (2), at least one intake opening (5) and at least two outflow nozzles (6, 7) being present in and on the casing (3), **characterised in that**, when projected onto a common plane, two outflow nozzles (6, 7) at a time are in a shared V-shaped layout such that the direction of outflow (AB) from each outflow nozzle (6, 7) is between 10° and 70° to the direction of intake (AN) of the liquid drawn in through the intake opening (5) which is stirred but contains solids, and the outflow nozzles (6, 7) are designed to be capable of having their direction of outflow (AB) adjusted.

2. Stirring mechanism according to claim 1, **characterised in that** the impeller (4) and the stirring shaft (2) have a common geometrical axis of rotation (8).

3. Stirring mechanism according to claim 2, **characterised in that** each of the outflow nozzles (6, 7) is aligned to the axis of rotation (8) at an angle in the range between 10° and 70°.

4. Stirring mechanism according to claim 2, **characterised in that**, starting from the axis of rotation (8), each of the outflow nozzles (6, 7) is aligned at an angle of 30°, 45° or 60°.

5. Stirring mechanism according to one of the preceding claims, **characterised in that** the casing (3) has at least two portions (9, 10) of its circumferential surface which are circular in cross-section and which widen out spirally into regions (11, 12) of which at least part extends radially or tangentially to the circular portions (9, 10).

6. Stirring mechanism according to one of the preceding claims, **characterised in that** the casing (3) has a plurality of outflow nozzles (6, 7) which are evenly distributed around its circumferential surface.

7. Stirring mechanism according to one of the preceding claims, **characterised in that** each outflow nozzle (6, 7) has a curve at the end.

8. Stirring mechanism according to one of the preceding claims, **characterised in that** the outflow nozzles (6, 7) are detachably connected to the casing (3).

9. Stirring mechanism according to one of the preceding claims, **characterised in that** the outflow nozzles (6, 7) have an opening portion (13) which tapers in in the direction of outflow.

10. Stirring mechanism according to one of claims 1 to 8, **characterised in that** the outflow nozzles (6, 7) have an opening portion (13) which widens out in the direction of outflow.

11. Stirring mechanism according to one of the preceding claims, **characterised in that** the casing (3) is designed to be pivotable, i.e. rotatable.

12. Stirring mechanism according to claim 11, **characterised in that** the casing (3) is connected to a positioning arrangement which has a lever mechanism, hydraulic system, pneumatic system or an electric-motor-driven or electromagnetic positioning drive or a combination of at least two such systems or principles of operation, to allow the casing (3) to be fixed in a variable way in a plurality of positions about the axis of rotation (8).

13. Stirring mechanism according to claim 12, **characterised in that** the positioning arrangement has a locking device to allow the casing (3) to be fixed in a variable way.

14. Stirring mechanism according to one of the preceding claims, **characterised in that** the stirring mechanism can be coupled to a pumping-away arrangement (16) which has one pumping-away connection (17) for each outflow nozzle (6, 7) which is present, the entire pumping-away arrangement (16) being designed to be movable relative to the stirring mechanism or the stirring mechanism being designed to be movable relative to the pumping-away arrangement (16) so that the "stirring" and/or "pumping away" operating positions are thereby defined.

15. Stirring mechanism according to claim 14, **characterised in that** the pumping-away arrangement (16) has flexible hoses or rigid tubular members which are coupled to the pumping-away connection (17).

16. Stirring mechanism according to one of the preceding claims, **characterised in that** the stirring mechanism or pumping-away arrangement (16) is held in a mounting (21) to allow it to be adjusted vertically in a container.

17. Method of stirring and pumping away liquids which contain solids, using a stirring mechanism according to one of the preceding claims, **characterised in that** the pumping-away connections (17) are shifted to a position in front of the outflow nozzles (6, 7) at the same time, i.e. synchronously, or individually, i.e. separately.

## Revendications

1. Agitateur pour liquides contenant des matières solides, tels que le lisier, avec au moins un mécanisme d'entraînement (1) pour un arbre agitateur (2) auquel est couplée au moins une roue hélice (4) logée dans un carter (3) et pouvant être entraînée en rotation par l'arbre agitateur (2), dans lequel le carter (3) comportant au moins une ouverture d'aspiration (5) et au moins deux tubulures d'évacuation (6, 7),
**caractérisé en ce que**,
selon une projection sur un plan commun, respectivement deux tubulures d'évacuation (6, 7) présentent un agencement commun en forme de V, de telle sorte que la direction de dégagement (AB) de chaque tubulure d'évacuation (6, 7) est comprise entre 10° et 70° par rapport à la direction d'aspiration (AN) du liquide aspiré via l'ouverture d'aspiration (5), brassé, mais contenant néanmoins des matières solides, et les tubulures d'évacuation (6, 7) sont configurées de manière à pouvoir régler leur direction de dégagement (AB).

2. Agitateur selon la revendication 1,
**caractérisé en ce que**
la roue hélice (4) et l'arbre agitateur (2) présentent un axe de rotation (8) géométrique commun.

3. Agitateur selon la revendication 2,
**caractérisé en ce que**
chacune des tubulures d'évacuation (6, 7) est orientée par rapport à l'axe de rotation (8) selon une plage angulaire située entre 10° et 70°.

4. Agitateur selon la revendication 2,
**caractérisé en ce que**
chacune des tubulures d'évacuation (6, 7) est orientée à partir de l'axe de rotation (8) selon un angle de 30°, 45° ou 60°.

5. Agitateur selon l'une quelconque des revendications précédentes,
**caractérisé en ce que**
le carter (3) présente dans sa surface latérale au moins deux tronçons (9, 10) à section transversale circulaire, qui se prolongent en s'élargissant en spirale dans une zone (11, 12) s'étendant au moins en partie radialement ou tangentiellement aux tronçons circulaires (9, 10).

6. Agitateur selon l'une quelconque des revendications précédentes,
**caractérisé en ce que**
le carter (3) présente plusieurs tubulures d'évacuation (6, 7) réparties uniformément sur sa surface latérale.

7. Agitateur selon l'une quelconque des revendications précédentes,
**caractérisé en ce que**
chaque tubulure d'évacuation (6, 7) se termine par une courbure finale.

8. Agitateur selon l'une quelconque des revendications précédentes,
**caractérisé en ce que**
les tubulures d'évacuation (6, 7) sont reliées de manière amovible au carter (3).

9. Agitateur selon l'une quelconque des revendications précédentes,
**caractérisé en ce que**
les tubulures d'évacuation (6, 7) présentent un tronçon d'ouverture (13) se rétrécissant dans la direction d'évacuation.

10. Agitateur selon l'une quelconque des revendications 1 à 8,
**caractérisé en ce que**
les tubulures d'évacuation (6, 7) présentent un tronçon d'ouverture (13) s'élargissant dans la direction d'évacuation.

11. Agitateur selon l'une quelconque des revendications précédentes,
**caractérisé en ce que**
le carter (3) est réalisé pivotant ou rotatif.

12. Agitateur selon la revendication 11,
**caractérisé en ce que**
le carter (3) est relié à un dispositif de réglage qui présente une mécanique de leviers, un système hydraulique, un système pneumatique ou une commande d'entraînement électromagnétique ou à moteur électrique ou une combinaison d'au moins deux de ces mécanismes ou principes d'action pour la fixation variable du carter (3) dans plusieurs positions autour de l'axe de rotation (8).

13. Agitateur selon la revendication 12,
**caractérisé en ce que**
le dispositif de réglage présente un dispositif de blocage pour la fixation variable du carter (3).

14. Agitateur selon l'une quelconque des revendications précédentes,
**caractérisé en ce que**
l'agitateur peut être couplé à un dispositif de pompage (16) muni d'une tubulure de pompage (17) pour chacune des tubulures d'évacuation (6, 7) présentes, dans lequel l'ensemble du dispositif de pompage (16) est configuré de manière à pouvoir être mobile par rapport à l'agitateur ou l'agitateur est configuré de manière à pouvoir être mobile par rapport au dispositif de pompage (16), de sorte que les positions de fonctionnement « brassage » et/ou « pompage » soient définies.

15. Agitateur selon la revendication 14,
**caractérisé en ce que**
le dispositif de pompage (16) présente des tuyaux flexibles ou des éléments tubulaires rigides qui sont couplés aux tubulures de pompage (17).

16. Agitateur selon l'une quelconque des revendications précédentes,
**caractérisé en ce que**
l'agitateur ou le dispositif de pompage (16) sont logés dans un support (21) pour le réglage en hauteur dans un récipient.

17. Procédé de brassage et de pompage de liquides contenant des matières solides, au moyen d'un agitateur selon l'une quelconque des revendications précédentes, **caractérisé en ce que**
les tubulures de pompage (17) sont poussées simultanément, donc de manière synchrone ou individuellement, donc séparément, devant les tubulures d'évacuation (6, 7) de l'agitateur.
